# EUROPÄISCHE PATENTSCHRIFT

(11) **EP 1 487 628 B1**
(45) Veröffentlichungstag und Bekanntmachung des Hinweises auf die Patenterteilung: **27.09.2006**
(21) Anmeldenummer: 03722343.5
(22) Anmeldetag: 17.03.2003
(51) Int. Cl.: B29C 49/46, B05B 7/00, C23C 4/12

(54) **VORRICHTUNG ZUR HERSTELLUNG VON KUNSTSTOFFBEHÄLTERN MITTELS STRECKBLASFORMEN**
DEVICE FOR THE PRODUCTION OF PLASTIC CONTAINERS BY MEANS OF STRETCH BLOW MOULDING
DISPOSITIF POUR PRODUIRE DES CONTENANTS EN PLASTIQUE PAR ETIRAGE-SOUFFLAGE

(30) Priorität: 18.03.2002 DE 10211878; 11.07.2002 DE 10231345
(43) Veröffentlichungstag der Anmeldung: 22.12.2004
(73) Patentinhaber: Tetra Laval Holdings & Finance S.A., 1009 Pully (CH)
(72) Erfinder: DAMEROW, Volker, 55278 Uelversheim (DE); GRUENWALD, Heinrich, 61194 Niddatal (DE); FUCHS, Jens, 55278 Uelversheim (DE); KÄSS, Hanno, 64287 Darmstadt (DE); WILHELM, Lothar, 61184 Karben-Gross-Karben (DE); KINDINGER, Hans, 65625 Bensheim (DE); SENDOBRY, Eberhard, 64668 Rimbach (DE); WLACH, Rüdiger, 64572 Büttelborn (DE)
(74) Vertreter: Weber, Dieter
(86) Internationale Anmeldenummer: PCT/EP2003/002736
(87) Internationale Veröffentlichungsnummer: WO 2003/078136

(56) Entgegenhaltungen:
- EP-A- 0 824 978
- WO-A-02/076709
- DE-C- 3 312 920
- US-A- 2 892 733
- US-A- 3 236 080
- US-A- 3 694 424

## Beschreibung

Die vorliegende Erfindung betrifft eine Vorrichtung, insbesondere eine Rundläufermaschine, zur Herstellung von Kunststoffbehältern mittels Blasen, mit einem Mischraum, der mit dem Innenraum eines Vorformlings verbindbar ist, mit einem drehbaren Karussell zur Aufnahme von mehreren Vorformlingen, einer Brennkammer im Innenraum des Vorformlings, einer Zuführungseinrichtung für die Zuführung eines explosiven Fluids in die Brennkammer und einer Zündeinrichtung zum Zünden des explosiven Fluids in der Brennkammer.

Kunststoffbehälter werden häufig durch Streckblasformen hergestellt. Dabei wird im allgemeinen zunächst mittels Spritzgießen ein Vorformling bzw. Pre-form hergestellt. Dieser Vorformling hat üblicherweise einen Durchmesser, der kleiner ist als der Durchmesser der herzustellenden Flasche und eine Länge, die kleiner als die Länge der herzustellenden Flasche ist. Weiterhin hat der Vorformling im allgemeinen bereits eine Öffnung, die bereits die Form der Öffnung der herzustellenden Flasche hat. Beispielsweise kann die Öffnung mit Gewinde und Haltering ausgestattet sein. Der Vorformling wird dann zunächst erwärmt und in eine Streckblasform eingebracht, deren Innenraum dem fertigen Behälter entspricht. Nun wird meist mit Hilfe eines axial in den Vorformling eingebrachten Streckstempels die Form axial gestreckt. Dabei wird in dem Vorformling ein Innendruck erzeugt, der meist im Bereich zwischen etwa 5 und etwa 15 bar liegt. Nachdem der Vorformling entsprechend gestreckt wurde, wird der Innendruck im Vorformling deutlich erhöht, d.h. in einen Bereich von etwa 30 bis 50 bar, wodurch der Vorformling "aufgeblasen" wird und gegen die Innenwand der Streckblasform gepreßt wird, so daß er die Form des herzustellenden Behälters einnimmt.

Aus der WO 98/06 559 ist bereits eine Vorrichtung zur Herstellung von Behältern bekannt. Hier werden PET-Flaschen dadurch hergestellt, daß zunächst ein Vorformling auf eine für das Streckblasen geeignete Temperatur von etwa 100 bis 120°C erwärmt wird. Dieser Vorformling wird in eine der Form des Behälters entsprechende Werkzeugform eingebracht, und es wird ein Streckdruck von mindestens 2 bar, üblicherweise 5 bis 10 bar, erzeugt. Mit Hilfe eines axialen und im allgemeinen vertikal bewegbaren Streckstempels wird der Vorformling axial gestreckt. Daraufhin wird in dem Vorformling ein Blasdruck erzeugt, der im Bereich von 40 bar liegt. Dadurch wird die Wand des Vorformlings an die Innenwand der Form gepreßt und dadurch der Behälter geformt.

Üblicherweise wird der Streckdruck mit Hilfe von Preßluft erzeugt. Für die Erzeugung des Blasdrucks wird jedoch hingegen meist ein spezieller Druckluftbehälter vorgesehen, der aufgrund des hohen notwendigen Drucks hohen Sicherheitsvorschriften unterliegt und aus diesem Grund ist das Verfahren sehr teuer.

In der WO 98/06 559 ist daher bereits vorgeschlagen worden, den Streckdruck durch Einblasen eines explosiven Gasgemisches in den Vorformling, zum Beispiel eines Gemischs aus Knallgas und einem Inertgas, zu erzeugen und den hohen Blasdruck durch Zünden des explosiven Gasgemisches zur Verfügung zu stellen, wobei durch diesen Explosionsblasdruck die Wandung des Vorformlings bzw. des teilweise vorgeformten Behälters ganz an die Innenwand der Streckblasform gepreßt wird. Das Verfahren hat zudem den Vorteil, daß während des Streckblasens durch die Explosion eine kurzzeitiger Temperaturanstieg erzielt wird, wodurch der herzustellende Behälter sterilisiert wird.

Aus der EP-A-0 824 978 ist eine Vorrichtung ähnlich der eingangs genannten Art bereits bekannt. Der zu formende Hohlkörper bzw. Behälter wird durch zwei Formhälften gebildet, die im Bereich nach oben über der späteren Öffnung des Behälters eine Sammelkammer für das bereits gemischte, explosive Fluid bilden. In dieser Sammelkammer ist außerdem ein Kolben vertikal nach oben und unten beweglich angeordnet, der über einen Antrieb in oszillierende Bewegung versetzt werden kann. Der Sammelraum kann bei oberer Stellung des Kolbens mit dem Innenraum des Behälters in Verbindung gebracht werden, um für einen neuen Formvorgang den Innenraum mit dem explosiven Fluid zu füllen. Danach wird der Kolben nach unten bewegt und komprimiert das Fluid in dem Vorformling, wonach ein Zünden des gasförmigen Fluids und ein Ausbilden des Behälters erfolgt. Zum Entspannen der verbrannten Gase wird der Kolben danach vertikal nach oben bewegt, und aus dem Sammelraum gelangt ein Anteil an Reaktionsprodukten in die Umgebung oder den nächsten Vorformling oder verbleibt kondensiert an den Wänden des Sammelbehälters.

Es hat sich bei der technischen Umsetzung gezeigt, daß die mit der aus der EP-A-0 824 978 bekannten Vorrichtung hergestellten Behälter industriell nicht verwendet werden konnten. Sie waren bezüglich Form und Volumen und auch bezüglich ihrer optischen Erscheinung nicht in ausreichender Qualität herstellbar und reproduzierbar. So war es beispielsweise nicht möglich, PET-Flaschen mit klaren durchsichtigen Wandungen herzustellen. Man vermutete, daß dieses teilweise unschöne Aussehen durch unerwünschte Temperatureinflüsse entstand, die aus einer nur unzureichend kontrollierbaren Explosion hervorgingen.

Der Sammelraum der bekannten Vorrichtung hat ein im Verhältnis zum Vorformling großes Volumen. Das Formwerkzeug ist aufwendig gestaltet, obgleich andere aufwendige Anlageteile außerdem benötigt werden, um die einzelnen unterschiedlichen Fluide vorzumischen, denn sie müssen fertig gemischt in den Sammelbehälter eingeführt werden.

Aus der US-A-3,236,080 ist auch eine Vorrichtung zur Herstellung von Kunststoffbehältern beschrieben, bei welchen es sich aber um eine andere Art Behälter handelt, die durchgehend oben und unten offen sind, so daß sich die Probleme wie bei einem Hohlkörper mit nur einer einzigen kleinen Öffnung gar nicht erst ergeben. Dennoch sind auch bei dieser bekannten Vorrichtung die Volumina der Brennkammern groß. Ein Umbau der bekannten Vorrichtung zur industriellen Herstellung von Kunststoffbehältern mit hoher gleichbleibender Qualität ist nicht beschrieben und im Sinn der nachfolgend beschriebenen Erfindung nicht möglich, von einer Rundläufermaschine ganz zu schweigen.

In der DE 199 38 724 ist daher bereits eine Vorrichtung zur Herstellung von Kunststoffbehältern mittels Streckblasformen beschrieben, bei der die Zündeinrichtung in dem vorrichtungsseitigen Innenraum angebracht ist, so daß die Explosion besser kontrolliert werden kann. Die hier beschriebene Vorrichtung, bei welcher der Vorformling zunächst an einem Ende einer zylindrischen Aufnahme befestigt werden muß, deren dem Vorformling abgewandte Seite mit einem Verteilerblock in Eingriff bringbar ist, ist jedoch nur für Linearmaschinen einsetzbar, da die Konstruktion des Verteilerkopfs einschließlich der Zündeinrichtung derart kompliziert und voluminös ist, daß sie nur stationär eingesetzt werden können. Zudem hat sich auch bei dieser Vorrichtung gezeigt, daß ein nicht zu vemachlässigender Anteil von endgeformten Behältern nicht den üblichen Qualitätsanforderungen entspricht. Zurückgeführt wird dies u. a. auf eine nur ungenügende Vermischung der das explosive Gas bildenden Fluidkomponenten.

Es ist daher eine Aufgabe der vorliegenden Erfindung, eine Vorrichtung der eingangs genannten Art zur Verfügung zu stellen, die es erlaubt, Kunststoffbehälter mit hoher gleichbleibender Qualität herzustellen und die zusätzlich den Einsatz an Rundläufermaschinen ermöglicht.

Erfindungsgemäß wird diese Aufgabe dadurch gelöst, daß der Mischraum in einem Verteilerblock gebildet ist, der mit zumindest zwei getrennten Fluidzuführungskanälen für die Zuführung von zwei unterschiedlichen Fluiden, deren Mischung das explosive Fluid bildet, verbunden und direkt mit einem Vorformling oder einem Behälter derart verbindbar ist, daß die Brennkammer aus dem Innenraum des Vorformlings und dem Mischraum gebildet ist, daß auf dem Karussell mehrere Vorformlinge und mehrere, vorzugsweise sechs, Verteilerblöcke aufgenommen sind und zusammen mit dem Karussell gedreht werden können. Durch die erfindungsgemäßen Maßnahmen ist zum einen die Brennkammer aus dem Innenraum des Vorformlings und aus dem Mischraum gebildet, und zum anderen kann der Volumenanteil der Brennkammer, der sich außerhalb des Vorformlings befindet, reduziert werden. Durch das direkte Verbinden des Verteilerblocks mit dem Vorformling befindet sich der Mischraum nahezu direkt oberhalb des Vorformlings. Dies hat den Vorteil, daß die die explosive Mischung bildenden Gase besser dosiert werden können und zudem deren Durchmischung innerhalb des Vorformlings besser gewährleistet ist. Der Aufbau der Vorrichtung wird außerdem kompakt und begünstigt dadurch besonders den Betrieb bei einer Rundläufermaschine. Die kompakte Bauweise ohne vorgeschaltete Mischanlagen erlaubt eine erhebliche Kostenreduzierung. Die unterschiedlichen Fluide, vorzugsweise Gase, werden über die Fluidzuführungskanäle in den Mischraum im Verteilerblock eingeführt und dort vermischt. Außerdem kann der Vorformling ohne Zwischenschalten einer entsprechenden Aufnahme praktisch, schnell und direkt fluiddicht mit dem Verteilerblock in Kontakt gebracht werden. Durch das Einsparen der früher für notwendig gehaltenen Aufnahme können die Herstellungs- und Betriebskosten der neuen Vorrichtung merklich gesenkt werden.

Während bei den bisher im Stand der Technik bekannten Linearmaschinen, die das sogenannte Explosionsstreckblasen einsetzen, maximal etwa 6000 Flaschen pro Stunde hergestellt werden konnten, kann erfindungsgemäß nun das Explosionsstreckblasverfahren auch auf Rundläufermaschinen eingesetzt werden, mit denen eine Herstellung von etwa 20000 bis 40000 Flaschen pro Stunde möglich ist. Eine mit den Merkmalen der Erfindung ausgestattete Rundläufermaschine ist mit extrem hoher Geschwindigkeit antreibbar.

Wenn weiterhin der Verteilerblock zumindest zwei getrennte Fluidzuführungskanäle für die Zuführung von zwei unterschiedlichen Fluiden, deren Mischung das explosive Fluid bildet, aufweist, gibt es eine wesentlich größere Sicherheit. Das explosive Fluid befindet sich ausschließlich in der Brennkammer, in welcher das explosive Fluid ohnehin gezündet werden soll. Bei direkter Zuführung des explosiven Fluids zum Verteilerblock kann es nämlich passieren, daß das entsprechend vorgesehene Schließventil nicht ordnungsgemäß schließt und daraufhin bei der Zündung des explosiven Fluids in der Brennkammer sich auch das noch in den Zuführungseinrichtungen befindliche explosive Fluid entzündet.

Während vielfältiger Versuche hat sich gezeigt, daß überraschenderweise die Qualität der streckblasgeformten Behälter durch Weglassen der Aufnahme bzw. durch direktes Verbinden des Vorformlings mit dem Verteilerblock deutlich gesteigert werden kann. Weitere Experimente haben gezeigt, daß das Volumen des Mischraums in dem Verteilerblock in einer besonders bevorzugten Ausführungsform kleiner als 50 cm³, vorzugsweise kleiner als 25 cm³ und besonders bevorzugt kleiner als 15 cm³ ist. Erfindungsgemäß ist daher vorgesehen, den Mischraum, d.h. denjenigen Teil der Brennkammer, der sich im Verteilerblock befindet, möglichst klein zu fertigen. Durch diese Maßnahme kann die Explosion bzw. die Dosierung der einzelnen das explosive Gas bildenden Fluide deutlich besser kontrolliert werden. Zudem ist die Durchmischung der einzelnen Komponenten des explosiven Gases innerhalb des Vorformlings deutlich homogener.

Weiterhin konnte festgestellt werden, daß die bei der Explosion entstehenden Reaktionsprodukte nachfolgende Explosionsvorgänge negativ beeinflussen können. Bei den im Stand der Technik vorgesehenen relativ großen Mischräumen, die zudem noch durch eine zylindrische Aufnahme vergrößert werden, verbleibt beim Entfemen des endgeformten Behälters und Aufsetzen des nächsten Vorformlings zwangsläufig ein nicht unerheblicher Anteil an Reaktionsprodukten, die beispielsweise an den Wänden des Mischraums kondensiert sind, im Verteilerblock und steht beim folgenden Explosionsvorgang als Verunreinigung zur Verfügung. Daher ist der prozentuale Anteil der Rückstände der bei der Explosion entstehenden Reaktionsprodukte, wenn der endgeformte Behälter durch einen neuen Vorformling ersetzt wird, bei den Vorrichtungen des Standes der Technik deutlich größer als bei der erfindungsgemäßen Vorrichtung. Somit konnte durch die erfindungsgemäße Maßnahme die Kontrollierbarkeit und insbesondere die Reproduzierbarkeit des Explosionsvorgangs weiter verbessert werden.

In einer besonders bevorzugten Ausführungsform ist weiterhin vorgesehen, daß der Verteilerblock Kühlwasserkanäle zur Kühlung des Verteilerblocks aufweist. Insbesondere beim Einsatz des Explosionsstreckblasverfahrens in Rundläufermaschinen, bei denen entsprechend viele Explosionen in kurzer Folge hintereinander durchgeführt werden, erfolgt eine signifikante Erwärmung des Verteilerblocks. Dadurch entsteht ein Temperaturgradient zwischen Vorformling und Verteilerblock, der das Explosionsverhalten negativ beeinflussen kann. Dadurch, daß der Verteilerblock entsprechend gekühlt werden kann, sind während der gesamten Betriebsdauer der erfindungsgemäßen Vorrichtung gleiche Prozeßbedingungen erzielbar.

Auch diese Maßnahme zeigt gerade in Kombination mit der direkten Verbindung des Vorformlings am Verteilerblock besondere Wirkung. Zwar wäre es prinzipiell möglich, auch bei den aus dem Stand der Technik bekannten Vorrichtungen den Verteilerblock zu kühlen, dies würde jedoch nichts daran ändern, daß die im Stand der Technik immer zusätzlich vorgesehene Aufnahme sich bei wiederholten Explosionsvorgängen erhitzt, so daß keine gleichmäßigen Prozeßbedingungen vorliegen.

In einer anderen besonders bevorzugten Ausführungsform ist vorgesehen, daß der Verteilerblock zumindest ein Nadelventil zum Öffnen und/oder Verschließen von zumindest einem Fluidzuführungskanal aufweist. Dadurch ist eine besonders genaue Dosierung des Fluids möglich, wodurch die Explosion besser kontrolliert werden kann. Wird das explosive Fluid beispielsweise aus Luft und Wasserstoff gebildet, so wird das Nadelventil zweckmäßigerweise zum Öffnen und/oder Schließen der Zuführung für Wasserstoff eingesetzt.

Mit Vorteil ist das Nadelventil als Rückschlagventil ausgebildet. Dadurch ist sichergestellt, daß auch bei hohem Druck innerhalb des Vorformlings das Nadelventil nicht unbeabsichtigt öffnet.

Die Qualität der zu formenden Behälter kann weiter gesteigert werden dadurch, daß der Verteilerblock einen Fluidabführungskanal für das Abführen der bei der Explosion des explosiven Fluids entstehenden Reaktionsprodukte aufweist. Bei den Vorrichtungen des Standes der Technik war entweder keine Fluidabführung vorgesehen, so daß beim Trennen der den Vorformling haltenden Aufnahme von dem Verteilerkopf das unter Druck stehende Innenvolumen des Vorformlings bzw. des zu diesem Zeitpunkt endgeformten Behälters schlagartig an Atmosphärendruck gesetzt wurde, oder es erfolgte eine Abführung des Fluids über die Zuführungen. Das erste Verfahren hat jedoch den Nachteil, daß eine nicht unerhebliche Menge der Reaktionsprodukte nach der Endformung des Behälters in diesem verbleibt und vor der Befüllung des Behälters erst entfernt werden muß. Das zweite Verfahren hat hingegen den Nachteil, daß die Reaktionsprodukte, die den Explosionsvorgang nachteilig beeinflussen können, in die Fluidzuführungen entweichen, wovon sie während der nächsten Zuführung des explosiven Fluids wieder in den nächsten Vorformling gebracht werden und dort die beschriebenen negativen Auswirkungen haben können.

Eine bevorzugte Ausführungsform sieht vor, daß ein Ventil zum Schließen und/oder Öffnen des Fluidabführungskanals vorgesehen ist, wobei das Ventil vorzugsweise eine Sperreinrichtung aufweist, die das Öffnen des Fluidabführungskanals verhindert und wobei das Ventil vorzugsweise derart ausgelegt ist, daß es bei entsperrter Sperreinrichtung selbsttätig durch den bei der Explosion des explosiven Fluids entstehenden Druck öffnet. Durch diese Maßnahme kann das Ventil sehr kostengünstig konstruiert werden. Während des eigentlichen Explosionsstreckblasvorgangs wird mittels der Sperreinrichtung das Ventil zum Schließen und/oder Öffnen des Fluidabführungskanals im geschlossenen Zustand gesperrt. Nachdem die Explosion stattgefunden hat, wodurch sich der Vorformling an die Innenwand der Streckblasform legt, wird die Sperreinrichtung gelöst, so daß der sich nach der Explosion in dem Behälter befindliche Druck ausreicht, das Ventil selbsttätig zu öffnen, wodurch der Druck und gleichzeitig die bei der Explosion entstandenen Reaktionsprodukte über den Fluidabführungskanal die Brennkammer verlassen können.

Eine zweckmäßige Ausführungsform der erfindungsgemäßen Vorrichtung sieht vor, daß eine mit einem Antrieb versehene Streckstange bzw. ein Streckstempel sich durch den Mischraum und, wenn die Vorrichtung mit einem Vorformling verbunden ist, in diesen hinein erstreckt, wobei die Streckstange dafür vorgesehen ist, den Vorformling axial zu strecken. Durch diese Maßnahme wird der Mischraum weiter verkleinert, was, wie bereits oben ausgeführt wurde, positive Auswirkungen auf die Kontrollierbarkeit des Explosionsvorgangs hat. Mit Vorteil ist die Streckstange in etwa zylindrisch ausgeführt mit mindestens zwei unterschiedlich dicken Abschnitten, wobei im ausgefahrenen Zustand der Streckstange, d.h. wenn sich die Streckstange in den Vorformling hinein bis zu dessen Boden erstreckt, der Abschnitt mit kleinerer Dicke sich in dem Vorformling befindet, während sich der Abschnitt größerer Dicke in dem Mischraum befindet.

Die Zündeinrichtung besteht vorzugsweise aus einer Zündkerze, die entweder in dem Verteilerblock oder in dem Teil der Streckstange angeordnet ist, der sich bei mit dem Verteilerblock verbundenem Vorformling in diesen erstreckt.

In einer weiteren besonders bevorzugten Ausführungsform ist vorgesehen, daß ein Drucksensor zum Messen des Drucks in der Brennkammer vorgesehen ist. Dadurch kann festgestellt werden, ob die in dem Vorformling eingebrachte explosive Mischung bereits gezündet hat. Insbesondere kann festgestellt werden, ob ein genügend hoher Druck erzeugt worden ist. Falls dies nicht der Fall war, kann entweder der Behälter entsprechend markiert und entsorgt werden oder es kann in einem weiteren Schritt noch einmal ein explosives Fluid in den Vorformling eingebracht werden und erneut gezündet werden.

Im allgemeinen besteht das explosive Fluid aus einem explosiven Gasgemisch. Es ist jedoch prinzipiell auch möglich, das explosive Fluid durch Flüssigkeiten zu erzeugen. Viele brennbare Flüssigkeiten zeigen jedoch nur im gasförmigen Zustand explosive Eigenschaften. Daher hat man schon versucht, flüssige Komponenten vor der Zuführung zu dem Ventilblock zu verdampfen, was jedoch aufgrund der notwendigen Erwärmung zusätzliche kostenintensive Einrichtungen erfordert.

Dies kann jedoch in einer weiteren zweckmäßigen Ausführungsform vermieden werden, bei der eine Fluidleitung vorgesehen ist, die mit einer Vernebelungsvorrichtung verbunden ist und in dem Mischraum mündet. Die Vernebelungsvorrichtung dient dazu, die Flüssigkeit - ganz ohne Verdampfer - fein zu vernebeln und in dieser Nebelform in den Mischraum des Verteilerblocks zu führen. Das vernebelte Fluid hat dann nahezu Gaseigenschaften und läßt sich beispielsweise mit anderen Gaskomponenten zu einem homogenen, explosiven Gasgemisch überführen. Dadurch wird der Aufwand eines separaten, externen Verdampfers eingespart.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Diese zeigen:
- Figur 1: perspektivisch einen Rotationsförderer mit sechs an seinem Umfang unten im Abstand angeordneten Streckblasformen unter schematischer Darstellung der eingeführten Vorformlinge und der abgeführten, fertigen Behälter in Form von Flaschen;
- Figur 2: eine Draufsicht auf den Rotationsförderer der Figur 1 ohne Deckplatten mit Ansicht auf die sechs Streckblasformen mit Druckspeichern;
- Figur 3: perspektivisch einen Verteilerblock mit einigen Fluidanschlüssen, angesetztem Vorformling und Druckspeicher;
- Figur 4: eine schematische Seitenansicht des Verteilerblocks mit dem Zuführweg des Präkursor-Materials und ausgeformtem Behälter (Flaschenform);
- Figur 5: eine etwas schematisierte Schnittdarstellung entsprechend der Einzelheit im Kreis X der Figur 4;
- Figur 6: eine Querschnittsansicht durch den Verteilerblock entlang der Linie VI-VI in Figur 5 (durch den in Figur 5 links gezeigten Ventilkörper);
- Figur 7: schematisiert eine Querschnittsansicht durch eine geschlossene Streckblasform mit darin befindlichem, ausgeformtem Behälter mit Lichtquelle und Meßsonde, und
- Figur 8: perspektivisch und schematisch die beiden Hälften der geschlossenen Streckblasform der Figur 7 von außen mit der Schnittlinie VII-VII.

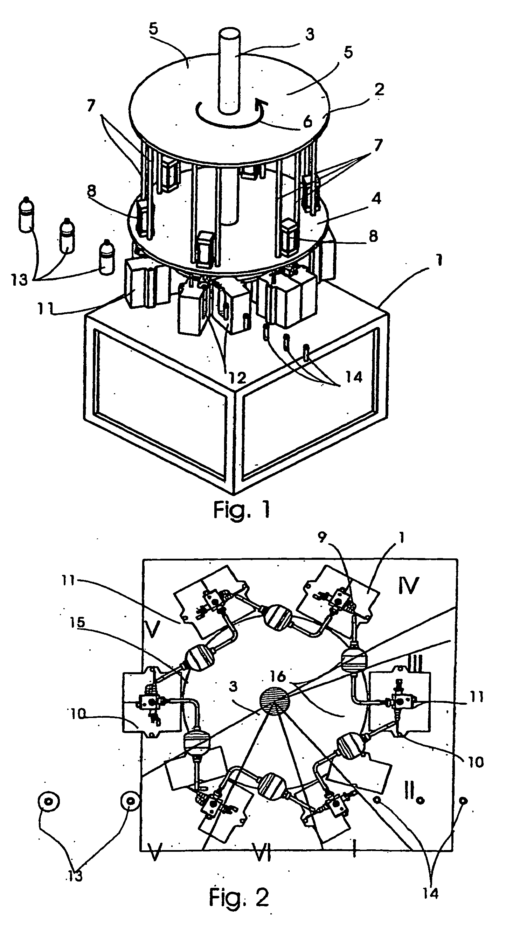

Eine Rundläufermaschine mit sechs Beschichtungsvorrichtungen für industrielle Anwendung ist in Figur 1 gezeigt. Über einem schematisch angedeuteten Rahmentisch 1 ist ein Rotationsförderer 2 um eine Antriebswelle 3 mit einer kreisrunden Grundplatte 4 und einer konzentrischen Deckplatte 5 gelagert. Der Rotationsförderer 2 ist in Blickrichtung der Antriebswelle 3 nach unten auf den Rahmentisch im Gegenuhrzeigersinn entsprechend dem gebogenen Pfeil 6 (Drehsinn) mit konstanter Winkelgeschwindigkeit während des Betriebs antreibbar.

Am Umfang verteilt trägt die untere Grundplatte 4 Paare von vertikalen Stützstangen 7, wobei zwischen jeweils zwei Stützstangen 7 ein Zylinder 8 für den später noch zu beschreibenden Streckstempel jeweils einer allgemein mit 9 bezeichneten Beschichtungsvorrichtung angebracht ist. Der Rotationsförderer 2 trägt sechs Beschichtungsvorrichtungen 9, weshalb sechs Paare von vertikalen Stützstangen 7 angezeigt sind, welche die Grundplatte 4 mit der Deckplatte 5 verbinden. Unter der Grundplatte 4 und über dem Rahmentisch 1 sind entsprechend den sechs Beschichtungsvorrichtungen 9 die Verteilerblöcke 10 mit darunter angeordneter Streckblasform 11 angebracht. Letztere besteht aus zwei etwa quaderförmigen Hälften, die innen eine Negativform 12 des auszuformenden Behälters 13 aufweisen. Dieser in den Figuren 1 und 2 gezeigte Behälter 13 hat Flaschenform. Eine Hälfte einer Streckblasform 11 enthält auch nur eine halbe Negativform 12, wobei beide Negativformen 12 einander zugewandt sind und bei geschlossener Streckblasform 11 den Raum des fertigen Behälters 13 bilden. Der Behälter wird in vertikal aufrechter Form hergestellt und transportiert. Auch die für seine Herstellung erforderlichen Vorformlinge 14 werden in vertikaler Position mit Öffnung oben ausgerichtet und gefördert. Entsprechend erstreckt sich die Trennebene zwischen den beiden Hälften der Streckblasform 11 vertikal von unten nach oben und also parallel zur Antriebwelle 3. Diese beiden Hälften der Streckblasform 11 sind an einer Seite über ein vertikales Scharnier so angelenkt, daß sie auseinandergefahren und zusammengefahren werden können. Im geöffneten Zustand können die Werkstücke eingeführt bzw. herausgeführt werden.

Zu jeder, auch in Figur 2 in Draufsicht ohne Platten 4 und 5 gezeigten Beschichtungsvorrichtung 9 gehört außer der Streckblasform 11 der Verteilerblock 10, ein Druckspeicher 15 und Fluidleitungen 16.

In Figur 2 erkennt man ferner sechs Winkelbereiche, durch welche jede der sechs Beschichtungsvorrichtungen 9 bei der Drehung 6 um 360° einmal hindurchgeführt wird. Es handelt sich um die Winkelzone I für das Einführen der Vorformlinge 14. Im Gegenuhrzeigersinn schließt sich dieser Winkelzone I die größere Winkelzone II für das Vorblasen und damit Vorformen der Vorformlinge 14 an. Danach folgt die sehr kleine Winkelzone III für das Zünden, während der auch der Verbrennungsprozeß beginnt und stattfindet. In der nahezu 180° großen, sich dann anschließenden Winkelzone IV ist der Kühlprozeß vorgesehen. In der Zone V werden wieder die Hälften der Streckblasform 11 geöffnet und die ausgeformten und beschichteten Behälter 13 herausgenommen. Die Winkelzone VI dient dem Leerlauf und gibt Reserven für etwaige Justagen.

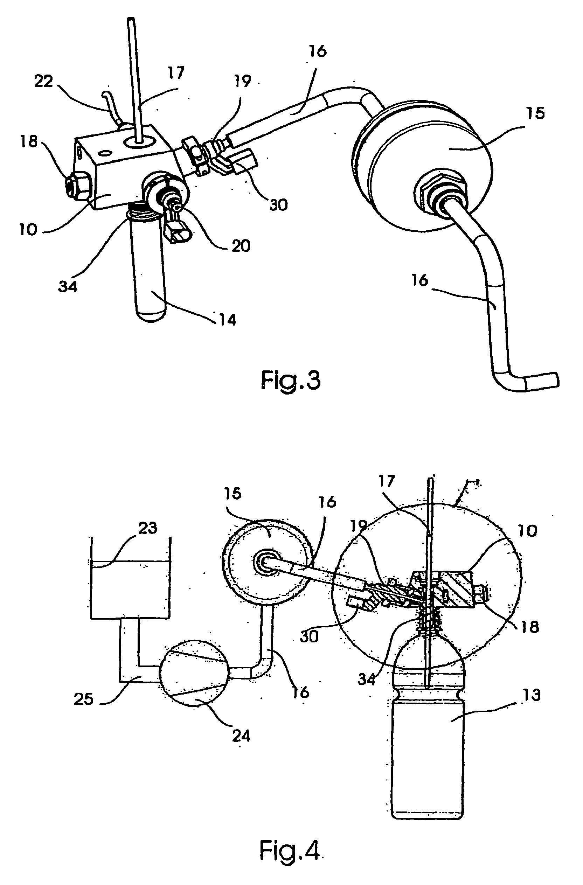

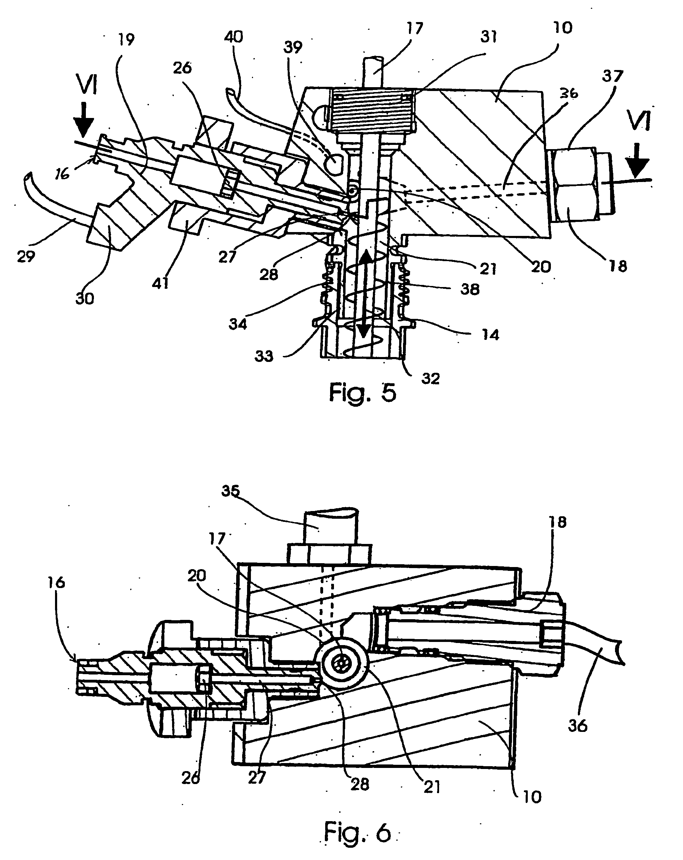

In Figur 3 ist an dem Verteilerblock 10 unten der Vorformling 14 angesetzt gezeigt. Konzentrisch zu diesem ragt vertikal nach oben der Streckstempel 17 aus dem Verteilerblock 10. Er ist vertikal beweglich und wird von den oben beschriebenen Zylindern 8 translatorisch vor- und zurückbewegt, um den weichen Vorformling 14 beim Vorblasen längs zu strecken. Senkrecht zu der vertikalen Richtung des Streckstempels 17 tritt nach Figur 3 das Gas Sauerstoff über eintretende Luft durch den Luftanschluß 18 in den Verteilerblock 10 ein. Die mit diesem Luftanschluß 18 verbundenen Luftleitungen (auch Fluidleitungen genannt) sind in den Figuren hier nicht besonders gezeigt. Auf der dem Luftanschluß 18 gegenüberliegenden Seite des Verteilerblocks 10 führt die Fluidleitung 16 Präkursor-Material in das für dieses vorgesehene Dosierventil mit dem Ventilkörper 19 für Präkursor-Flüssigkeit. Würde man den Luftanschluß 18 auf der einen Seite mit dem Ventilkörper 19 auf der anderen Seite des Verteilerblocks 10 mit einer gedachten Linie verbinden, dann tritt senkrecht zu dieser Linie und senkrecht zu dem Streckstempel 17 eine weitere, nicht gezeigte Fluidleitung für Wasserstoff in die allgemein mit 20 bezeichnete Wasserstoffdüse und dann in den in Figur 5 gezeigten Mischraum 21 in den Verteilerblock 10 ein. In Figur 3 ist ferner noch auf der der Wasserstoffdüse 20 gegenüberliegenden Seite des Verteilerblocks 10 ein Stecker mit Kabel 22 für das Einleiten von Steuerspannungen angedeutet.

Figur 4 zeigt die wesentlichen Teile einer Beschichtungsvorrichtung 9, bei welcher die Streckblasform weggelassen ist und die Beschickung der Fluidleitungen 16 für die Präkursor-Flüssigkeit verdeutlicht ist. Diese Präkursor-Flüssigkeit als Fluid befindet sich bei Raumtemperatur und Normaldruck in dem Ausgangstank 23. Eine in Figur 4 schematisch angedeutete Pumpe 24 zieht die Präkursor-Flüssigkeit über die Leitung 25 aus dem Ausgangstank 23 ab und drückt sie unter einem hohen Druck von über 40 bar durch die Fluidleitung 16 in den Druckspeicher 15. Diese Präkursor-Flüssigkeit steht im Ventilkörper bis zu dem in Figur 5 schematisch gezeichneten Ventil 26 an. Nur wenn dieses öffnet, kann die Präkursor-Flüssigkeit mit ihrem hohen Druck in die ebenfalls in Figur 5 gezeigte Auslaßdüse 27 gelangen, um an der Grenzfläche an der Vernebelungsstelle 28 (Figur 5) direkt am Eingang in den Mischraum 21 vernebelt zu werden. Das Steuersignal für das Ventil 26 wird über die Leitung 29 eingeleitet, die über den elektrischen Anschluß 30 von einer nicht gezeigten Computer programmierbaren Steuerung zu dem Ventil 26 eingespeist wird.

Die Figuren 5 und 6 zeigen Schnittansichten durch den Verteilerblock 10 mit den besonders interessierenden Teilen der Beschichtungsvorrichtung. Die auch in der Maschine wichtige vertikale Richtung liegt im Streckstempel 17, der sich mittig in einem Mischraum 21 mit Zylinderform befindet und über einen Verschluß 31 abgedichtet im Verteilerblock 10 bzw. durch dessen Mischraum 21 in Richtung des vertikalen Doppelpfeils 32 nach oben und unten bewegt werden kann. Auf eine von dem Verteilerblock 10 vertikal nach unten sich erstreckende zylindermantelförmige Halterung 33 wird der Flaschenhals 34 des darunter abgebrochen gezeigten Vorformlings 14 aufgesteckt. Man erkennt, daß das ebenfalls zylinderförmige Innere des Vorformlings 14 mit dem Mischraum 21 in direkter Verbindung steht. Der Mischraum 21 wird nach oben hin erst durch den Verschluß 31 begrenzt. Bei der Darstellung der Figur 5 blickt man auf die Wasserstoffdüse 20 und erkennt links die Auslaßdüse für die Präkursor-Flüssigkeit 27. In Figur 6 ist die gesamte Wasserstoffzufuhr allgemein mit 35 bezeichnet. Deren Düse 20 ist in Figur 6 tangential zu dem Mischraum 21 angesetzt, damit der ausströmende und in den Mischraum 21 einströmende Wasserstoff eine Schraubenlinie zu strömen beginnt. Das Gleiche gilt für die einströmende Luft über den Luftanschluß 18, dessen Fluidleitung 36 in Figur 6 abgebrochen gezeigt ist, wobei man in Figur 5 rechts die Verschraubung 37 am geräteseitigen Ende der Fluidleitung 16 für Luft erkennt. Auch die Luft strömt tangential in den Mischraum 21 ein, wie dies auch gemäß Figur 6 für das durch die Düse 27 vernebelte Präkursor-Material gilt. Die drei Fluide bilden infolgedessen die in Figur 5 gezeigte schraubenförmige Bahn 38 mit vertikaler Komponente nach unten, so daß in den Mischraum 21 einerseits und den Innenraum des Vorformlings 14 andererseits ein praktisch homogenes Gasgemisch eingeleitet wird. In Figur 5 ist auch ein Sensor 39 gezeigt, welcher Meßdaten über Meßkabel 40 aus dem Inneren des Verteilerblocks 10 zu nicht gezeigten Auswerteeinheiten nach außen leitet. Der in Figur 5 gezeigte Ventilkörper 19 wird über den Adapter 41 mit Flansch 42 am Verteilerblock gehalten.

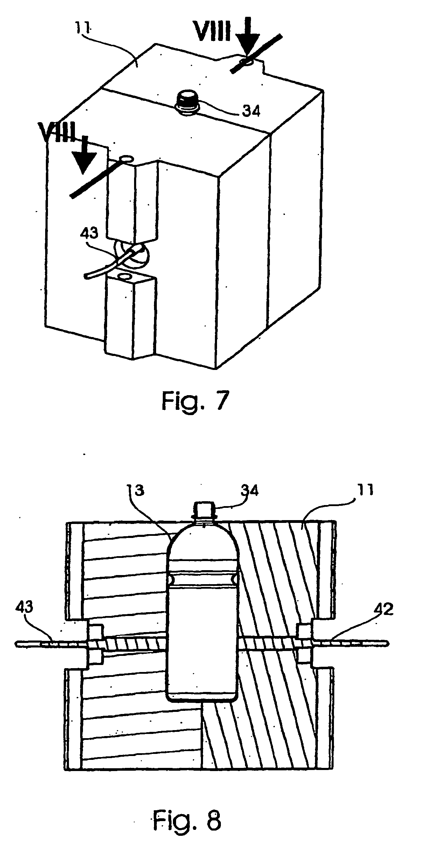

In den Figuren 7 und 8 ist diejenige Ausführungsform beim Messen der physikalischen Eigenschaften des Fluidgemisches gezeigt, bei welcher eine Meßsonde 40 auf der einen Seite des Behälters 13 und eine Lichtquelle 43 auf der gegenüberliegenden Seite in der Streckblasform 11 angeordnet sind.

Für den Betrieb der Beschichtungsvorrichtung wird als Vorbereitung ein kontinuierlich einstellbarer Elektromotor für den Antrieb der Pumpe 24 (Figur 4) als Hochdruckpumpe eingerichtet. Als Computer programmierbare Steuerung wird ein PLC-Gerät verwendet und mit einer Steuereinheit verbunden, von der Steuersignale zu den einzelnen Ventilen, Sensoren, Reglern und zum Motor gehen. Der PLC schickt eingestellte Werte für das Flüssigkeitsvolumen im Ausgangstank 23 für Präkursor-Flüssigkeit, Werte für den Einspritzdruck und auch den Startpunkt der Einspritzungen zu der Steuereinheit. Entsprechend gesteuert läuft der Betrieb ab.

Betrachtet man die Winkelzonen der Figur 2, dann läßt man den Umlauf gemäß dem gebogenen Pfeil 6 in der Winkelzone I beginnen. Hier öffnet sich die Streckblasform 11, und der vordere Vorformling einer Reihe von gleichmäßig im Abstand angeordneten Vorformlingen 14 gelangt nach Durchlaufen der Förderbahn gemäß Figur 2 von rechts nach links in einem Halter unter Vorheizen auf Erweichungstemperatur von 80 bis 90°C an den Einführort in der Negativform 12. Dort wird der Vorformling gemäß Darstellung der Figur 3 auf die zylindermantelförmige Halterung 33 (Figur 5) aufgesteckt. Danach wird die Streckblasform 11 geschlossen. Weil sich der Rotationsförderer 2 mit konstanter Winkelgeschwindigkeit im Drehsinn des gebogenen Pfeils 6 dreht, hat inzwischen bis zum Schließen der Streckblasform 11 die Vorrichtung den Winkelbereich von etwa 20° der Winkelzone I für das Einführen des Vorformlings 14 durchlaufen.

Nun tritt die geschlossene Streckblasform 11 in die Winkelzone II ein, in welcher das Vorblasen von Gasen in den Mischraum 21 und das Innere des Vorformlings 14 beginnt. Über den Luftanschluß 18 wird Luft bei Zimmertemperatur mit einem Druck ≤ 15 bar in den Mischraum 21 eingeblasen. Dann wird auch Wasserstoff über die Wasserstoffzufuhr 35 und durch die Wasserstoffdüse 20 exzentrisch zur vertikalen Mittelachse und exzentrisch zum Streckstempel 17 tangential in die Mischkammer 21 eingeblasen, so daß sich die Luft mit dem darin enthaltenen Sauerstoff und auch der Wasserstoff in einer Schraubenlinie entsprechend der schraubenförmigen Bahn 38 der Fluide vermischen. In der Mischkammer 21 hat sich damit ein Druck von etwa 12 bis 13 bar aufgebaut, um zusammen mit der vertikalen Abwärtsbewegung des Streckstempels 17 den Vorformling 14 auszuweiten und zum Teil bereits in die Form des letztlich gewünschten Behälters 13 zu formen.

Es wird nun auch die Präkursor-Flüssigkeit durch Öffnen des Ventils 26 (Figur 5) zur Auslaßdüse 27 für Präkursor-Flüssigkeit und dort zu der Vemebelungsstelle 28 geführt. Auf ein Mikroliter Präkursor-Flüssigkeit kommen etwa 0,5 bis 1,5 Liter Luft. Infolge dieses Verhältnisses beginnt das Vernebeln und Zumischen von Präkursor-Flüssigkeit, nachdem Luft und Wasserstoff bereits zugeführt wurden. Deren Zuführzeiten sind länger; die des Präkursor-Materials gesteuert kürzer. Über den durch die Pumpe 24 erzeugten Druck und die Geometrie der Düse 27, insbesondere an der Vemebelungsstelle 28, erfolgt die Erzeugung des Nebels bzw. die Umwandlung der Präkursor-Flüssigkeit in sehr feine Tröpfchen mit gasähnlichem Verhalten. Der Präkursor-Nebel kann bei exzentrisch tangentialem Einleiten in den zylinderförmigen Mischraum 21, zum Beispiel unter einem Winkel von 15° zum Streckstempel 17, in die schraubenförmige Bahn 38 der Fluide eingehen und dort mit den anderen Gasen innig vermischt werden. Die Mischkammer 21 und auch das Innere des Vorformlings 14 wirken wie eine Verwirbelungskammer. Das Vorblasen des Behälters bis auf etwa 90% seiner endgültigen Gestalt mit Hilfe des jetzt explosiven Gasgemisches (Luft, Sauerstoff, Wasserstoff, Präkursor-Material) ist nach Durchlaufen der Winkelzone II über einen Winkel von etwa 60 bis 80° beendet.

Während des Durchlaufs der Winkelzone III erfolgt die Zündung mit Hilfe einer in dem Werkzeug, zum Beispiel im Verteilerblock 10 oder sogar im Streckstempel 17 angeordneten Zündeinrichtung, zum Einleiten der Verbrennung. In dieser Winkelzone III erfolgt die endgültige Formgebung, bei welcher die Wandungen des Vorformlings 14 an die Innenwand der Negativform 12 der Streckblasform 11 gelegt werden. Nach dem Zünden und Durchlaufen der Winkelzone III über einen Winkel von 5° bis 25°, vorzugsweise 15°, tritt die Beschichtungsvorrichtung nun in die Winkelzone IV ein, in welcher ein Kühlen beginnt und nach Durchlaufen eines Winkelbereichs von etwa 180° abgeschlossen ist. Gleichzeitig mit den Wänden des Behälters kühlt auch die Innenbeschichtung aus.

Der Behälter tritt in der noch geschlossenen Streckblasform 11 in die Winkelzone V ein, in welcher die Streckblasform 11 sich öffnet und der Behälter 13 herausgenommen werden kann. Er wird dann auf einen Linearförderer gemäß Figur 2 links unten gestellt und horizontal nach links außen abgeführt. Danach durchläuft die offene Streckblasform 11 die Leerlauf-Winkelzone VI, um beim Eintritt in die Winkelzone I für das Einführen des Vorformlings 14 letzteren wieder aufzunehmen. Das Spiel auf diesem Rotationsförderer 2 beginnt hier erneut.

Es versteht sich, daß das Einspritzen der Präkursor-Flüssigkeit durch Öffnen des Ventils 26 gesteuert so lange erfolgt, bis das Ventil 26 wieder geschlossen wird. In dem Werkzeug, d.h. der Form 11, ist ein Sensor 40 als Meßsonde entsprechend der Darstellung der Figur 7 eingebracht. Dieser Sensor befindet sich außerhalb des in Herstellung befindlichen Behälters 13. Auf der dem Behälter 13 gegenüberliegenden Seite liegt in der optischen Achse gemäß Figur 7 die Lichtquelle 43. Es ist auf diese Weise möglich, zum Beispiel die farbliche Eigenschaft des in dem Behälter 13 befindlichen Fluidgemisches während oder auch unmittelbar nach der Verbrennung zu messen. Die Meßsignale werden in die Steuerung gegeben und können das Verfahren des Formens und Beschichtens schon des nächst folgenden Behälters beeinflussen. Auch andere Meßverfahren sind möglich, wenn man den Sensor (oder auch mehrere Sensoren) im Verteilerblock 10 selbst anordnet. Zwar sind Strahlungsmessungen auf diese Weise nicht möglich, die Ausgestaltung der Meßanlage ist aber in diesem Fall technisch einfacher. Auch aus Messungen der Temperatur, des Drucks, Schalls usw. können wertvolle Parameter ermittelt werden, um das Formen und Beschichten des nächst folgenden Behälters eines kontinuierlichen Betriebs so zu beeinflussen, daß die fertigen Produkte die gewünschte Qualität haben.

Bei der hier in den Figuren 1 und 2 gezeigten Ausführungsform hat man sechs Stationen auf dem Umfang der Grundplatte 4 verteilt angeordnet. Es versteht sich, daß man auch 1 - 40 Stationen je nach den technischen Möglichkeiten anbringen kann.

### Bezugszeichenliste

- 1: Rahmentisch
- 2: Rotationsförderer
- 3: Antriebswelle
- 4: Grundplatte
- 5: Deckplatte
- 6: gebogener Pfeil (Drehsinn)
- 7: vertikale Stützstange
- 8: Zylinder für den Streckstempel
- 9: Beschichtungsvorrichtung
- 10: Verteilerblock
- 11: Streckblasform
- 12: Negativform
- 13: Behälter (PET-Flasche)
- 14: Vorformling
- 15: Druckspeicher
- 16: Fluidleitung
- 17: Streckstempel
- 18: Luftanschluß
- 19: Ventilkörper für die Präkursor-Flüssigkeit
- 20: Wasserstoffdüse
- 21: Mischraum
- 22: Kabel für Steuerspannung
- 23: Ausgangstank für Präkursor-Flüssigkeit
- 24: Pumpe
- 25: Leitung
- 26: Ventil
- 27: Auslaßdüse für Präkursor-Flüssigkeit
- 28: Vemebelungsstelle
- 29: Leitung für Steuersignal
- 30: elektrischer Anschluß
- 31: Verschluß
- 32: vertikaler Doppelpfeil
- 33: zylindermantelförmige Halterung
- 34: Flaschenhals
- 35: Wasserstoffzufuhr
- 36: Fluidleitung für Luft
- 37: Verschraubung
- 38: schraubenförmige Bahn der Fluide
- 39: Sensor
- 40: Meßkabel
- 41: Adapter
- 42: Flansch des Adapters 41
- 43: Lichtquelle
- I: Zone für das Einführen der Vorformlinge 14
- II: Zone für das Vorblasen der Vorformlinge 14
- III: Zone für das Zünden der Vorformlinge 14
- IV: Zone für das Kühlen der Vorformlinge 14
- V: Zone für das Herausnehmen der Behälter 13
- VI: Zone für den Leerlauf

## Patentansprüche

1. Vorrichtung, insbesondere eine Rundläufermaschine (2), zur Herstellung von Kunststoffbehältern (13) mittels Blasen, mit zumindest einem Mischraum (21), der mit dem Innenraum eines Vorformlings (14) verbindbar ist, mit einem drehbaren Karussell zur Aufnahme von mehreren Vorformlingen (14), einer Brennkammer im Innenraum des Vorformlings (14), einer Zuführungseinrichtung für die Zuführung eines explosiven Fluids in die Brennkammer (21) und einer Zündeinrichtung zum Zünden des explosiven Fluids in der Brennkammer (21), **dadurch gekennzeichnet, daß** Mischraum (21) in einem Verteilerblock (10) gebildet ist, der mit zumindest zwei getrennten Fluidzuführungskanälen (16) für die Zuführung von zwei unterschiedlichen Fluiden, deren Mischung das explosive Fluid bildet, verbunden und direkt mit einem Vorformling (14) oder einem Behälter derart verbindbar ist, daß die Brennkammer aus dem Innenraum des Vorformlings (14) und dem Mischraum (21) gebildet ist, daß auf dem Karussell mehrere Vorformlinge (14) und mehrere, vorzugsweise sechs, Verteilerblöcke (10) aufgenommen sind und zusammen mit dem Karussell gedreht werden können.

2. Vorrichtung nach Anspruch 1, **dadurch gekennzeichnet, daß** das Volumen des Mischraums (21) kleiner als 50 cm³, vorzugsweise kleiner als 25 cm³ und besonders bevorzugt kleiner als 15 cm³ ist.

3. Vorrichtung nach Anspruch 1 oder 2, **dadurch gekennzeichnet, daß** der Verteilerblock (19) Kühlwasserkanäle zur Kühlung des Verteilerblockes (10) aufweist.

4. Vorrichtung nach einem der Ansprüche 1 bis 3, **dadurch gekennzeichnet, daß** der Verteilerblock zumindest ein Nadelventil (19) zum Öffnen und/oder Verschließen von zumindest einem Fluidzuführungskanal (16) aufweist.

5. Vorrichtung nach Anspruche 4, **dadurch gekennzeichnet, daß** das Nadelventil (19) ein Rückschlagventil ist.

6. Vorrichtung nach einem der Ansprüche 1 bis 5, **dadurch gekennzeichnet, daß** der Verteilerblock einen Fluidabführungskanal (25) für das Abführen der bei der Explosion des explosiven Fluids entstehenden Reaktionsprodukte aufweist.

7. Vorrichtung nach Anspruch 6, **dadurch gekennzeichnet, daß** ein Ventil (26) zum Schließen und/oder Öffnen des Fluidabführungskanal (25) vorgesehen ist, wobei das Ventil (26) vorzugsweise eine Sperreinrichtung aufweist, die das Öffnen des Fluidabführungskanal (25) verhindert und wobei das Ventil vorzugsweise derart ausgelegt ist, daß es bei entsperrter Sperreinrichtung selbsttätig durch den bei der Explosion des explosiven Fluid entstehenden Druck öffnet.

8. Vorrichtung nach einem der Ansprüche 1 bis 7, **dadurch gekennzeichnet, daß** ein mit einem Antrieb versehene Streckstange (17) sich durch den Mischraum (21) und, wenn die Vorrichtung mit einem Vorformling (14) verbunden ist, in diesen hinein erstreckt, wobei die Streckstange (17) dafür vorgesehen ist, den Vorformling (14) axial zu strecken.

9. Vorrichtung nach einem der Ansprüche 1 bis 8, **dadurch gekennzeichnet, daß** die Zündeinrichtung aus einer Zündkerze (48) besteht, die entweder in dem Verteilerblock (10) oder in dem Teil der Streckstange (17), der sich bei verbundenem Vorformling (14) in diesen erstreckt, angeordnet ist.

10. Vorrichtung nach einem der Ansprüche 1 bis 9, **dadurch gekennzeichnet, daß** ein Drucksensor (39) zum Messen des Druckes in der Brennkammer (21) vorgesehen ist.

11. Vorrichtung nach einem der Ansprüche 1 bis 10, **dadurch gekennzeichnet, daß** zumindest eine Fluidleitung (25) vorgesehen ist, die mit einer Vernebelungsvorrichtung (28) verbunden ist und in dem Mischraum (21) mündet.

## Claims

1. An apparatus, in particular a round rotor machine (2), for producing plastic containers (13) by means of blowing, having at least one mixing chamber (21) which can be connected to the internal space of a preform (14), having a rotatable carousel for receiving a plurality of preforms (14), a combustion chamber in the internal space of the preform (14), a feed device for feeding an explosive fluid into the combustion chamber (21) and a firing device for firing the explosive fluid in the combustion chamber (21), **characterised in that** the mixing chamber (21) is formed in a distributor block (10) which is connected to at least two separate fluid feed passages (16) for supply of two different fluids, whereof the mixture forms the explosive fluid, and which is able to be connected directly to a preform (14) or a container in such a way that the combustion chamber is formed from the internal space of the preform (14) and the mixing chamber (21), that a plurality of preforms (14) and a plurality of, preferably six, distributor blocks (10) is received on the carousel and can be rotated together with the carousel.

2. An apparatus according to Claim 1, **characterised in that** the volume of the mixing chamber (21) is smaller than 50 cm³, preferably smaller than 25 cm³, and, particularly preferably, smaller than 15 cm³.

3. An apparatus according to Claim 1 or Claim 2, **characterised in that** the distributor block (19) has cooling water passages for cooling the distributor block (10).

4. An apparatus according to one of Claims 1 to 3, **characterised in that** the distributor block has at least one needle valve (19) for opening and/or closing at least one fluid feed passage (16).

5. An apparatus according to Claim 4, **characterised in that** the needle valve (19) is a non-return valve.

6. An apparatus according to one of Claims 1 to 5, **characterised in that** the distributor block has a fluid discharge passage (25) for discharge of the reaction products produced upon explosion of the explosive fluid.

7. An apparatus according to Claim 6, **characterised in that** there is provided a valve (26) for closing and/or opening the fluid discharge passage (25), wherein the valve (26) preferably has a locking device which prevents opening of the fluid discharge passage (25), and wherein the valve is preferably designed in such a way that when the locking device is released it automatically opens due to the pressure produced upon explosion of the explosive fluid.

8. Apparatus according to one of Claims 1 to 7, **characterised in that** a stretching bar (17) provided with a drive extends through the mixing chamber (21) and, when the apparatus is connected to a preform (14), into the preform, wherein the stretching bar (17) is provided for axially stretching the preform (14).

9. An apparatus according to one of Claims 1 to 8, **characterised in that** the firing device comprises a spark plug (48) which is arranged either in the distributor block (10) or in the part of the stretching bar (17), which, when the preform (14) is connected, extends into the preform.

10. An apparatus according to one of Claims 1 to 9, **characterised in that** there is provided a pressure sensor (39) for measuring the pressure in the combustion chamber (21).

11. An apparatus according to one of Claims 1 to 10, **characterised in that** there is provided at least one fluid line (25) which is connected to an atomisation device (28) and which opens into the mixing chamber (21).

## Revendications

1. Dispositif, notamment machine tournante (2), destiné à la fabrication de récipients (13) en matière plastique par soufflage, ledit dispositif comportant un espace de mélange (21) qui peut être raccordé à l'espace intérieur d'une préforme (14), un carrousel rotatif destiné à recevoir plusieurs préformes (14), une chambre de combustion placée dans l'espace intérieur de la préforme (14), un dispositif d'amenée destiné à amener un fluide explosif dans la chambre de combustion (21) et un dispositif d'allumage destiné à allumer le fluide explosif dans la chambre de combustion (21), **caractérisé en ce que** l'espace de mélange (21) est ménagé dans un bloc distributeur (10) qui est relié à au moins deux canaux d'amenée de fluide séparés (16) destinés à amener deux fluides différents dont le mélange donne le fluide explosif et qui peut être relié directement à une préforme (14) ou à un récipient de sorte que la chambre de combustion est constituée de l'espace intérieur de la préforme (14) et de l'espace de mélange (21) et que plusieurs préformes (14) et plusieurs blocs distributeurs (10), avantageusement six, sont reçus sur le carrousel et peuvent être mis en rotation conjointement avec le carrousel.

2. Dispositif selon la revendication 1, **caractérisé en ce que** le volume de l'espace de mélange (21) est inférieur à 50 cm³, avantageusement inférieur 25 cm³ et de façon particulièrement préférée inférieur 15 cm³.

3. Dispositif selon la revendication 1 ou 2, **caractérisé en ce que** le bloc distributeur (19) comporte des canaux d'eau de refroidissement destinés à refroidir le bloc distributeur (10).

4. Dispositif selon l'une des revendications 1 à 3, **caractérisé en ce que** le bloc distributeur comporte au moins une soupape à pointeau (19) destinée à ouvrir et/ou fermer au moins un canal d'amenée de fluide (16).

5. Dispositif selon la revendication 4, **caractérisé en ce que** la soupape à pointeau (19) est une soupape de retenue.

6. Dispositif selon l'une des revendications 1 à 5, **caractérisé en ce que** le bloc distributeur comporte un canal d'évacuation de fluide (25) destiné à évacuer les produits de réaction générés lors de l'explosion du fluide explosif.

7. Dispositif selon la revendication 6, **caractérisé en ce qu'**il est prévu une soupape (26) destinée à fermer et/ou ouvrir le canal d'évacuation de fluide (25), la soupape (26) comportant avantageusement un dispositif de blocage qui empêche l'ouverture du canal d'évacuation de fluide (25) et la soupape est étudiée avantageusement de façon à s'ouvrir automatiquement, lorsque le dispositif de blocage est débloqué, sous l'action de la pression générée lors de l'explosion du fluide explosif.

8. Dispositif selon l'une des revendications 1 à 7, **caractérisé en ce qu'**une bielle d'étirage (17), dotée d'un entraînement, s'étend à travers l'espace de mélange (21) jusque dans une préforme (14) lorsque le dispositif est relié à cette préforme, la bielle d'étirage (17) étant destinée à étirer axialement la préforme (14).

9. Dispositif selon l'une des revendications 1 à 8, **caractérisé en ce que** le dispositif d'allumage est constitué par une bougie d'allumage (48) qui est placée soit dans le bloc distributeur (10) soit dans la partie de la bielle d'étirage (17) qui s'étend dans la préforme (14) lorsque celle-ci est raccordée.

10. Dispositif selon l'une des revendications 1 à 9, **caractérisé en ce qu'**il est prévu un capteur de pression (39) destiné à mesurer la pression dans la chambre de combustion (21).

11. Dispositif selon l'une des revendications 1 à 10, **caractérisé en ce qu'**il est prévu au moins une conduite de fluide (25) qui est reliée à un dispositif de nébulisation (28) et qui débouche dans la chambre de mélange (21).
